# EUROPÄISCHE PATENTSCHRIFT

(11) **EP 3 772 505 B1**
(45) Veröffentlichungstag und Bekanntmachung des Hinweises auf die Patenterteilung: **23.04.2025**
(21) Anmeldenummer: 20181367.2
(22) Anmeldetag: 22.06.2020
(51) Int. Cl.: C05B 11/02, C05B 19/00

(54) **VERFAHREN ZUR HERSTELLUNG VON DÜNGEMITTELGRANULAT**
METHOD FOR MANUFACTURING FERTILIZER GRANULES
PROCÉDÉ DE FABRICATION DE GRANULÉS D'ENGRAIS

(30) Priorität: 08.08.2019 DE 102019211958
(43) Veröffentlichungstag der Anmeldung: 10.02.2021
(73) Patentinhaber: Glatt Ingenieurtechnik GmbH, 99427 Weimar (DE)
(72) Erfinder: Jacob, Dr. Michael, 99425 Weimar (DE)
(74) Vertreter: Patentanwälte Magenbauer & Kollegen Partnerschaft mbB

(56) Entgegenhaltungen:
- DE-A1- 102016 116 633
- DE-A1- 4 329 205
- US-A- 3 419 378
- US-A- 5 211 735

## Beschreibung

Die Erfindung betrifft ein Verfahren zur Herstellung von Düngemittelgranulat durch Eindüsung von Ausgangsstoffen mittels mindestens einer Mehrstoffdüse in eine bewegte Partikelvorlage, wobei als Ausgangsstoff eine Säure und eine einen phosphathaltigen Rohstoff aufweisende Suspension verwendet wird, die durch die Mehrstoffdüse als Sprühstrahl in der bewegten Partikelvorlage verdüst werden, sodass die Ausgangsstoffe im Sprühstrahl miteinander reagieren und sich das Düngemittelgranulat im Sprühstrahl bildet.

Verfahren und Vorrichtungen zur Herstellung von Düngemittelgranulaten gehören seit vielen Jahren zum Stand der Technik. Aufgrund gesetzlicher Vorgaben und der Abnahme der weltweiten Phosphorvorräte wird eine Phosphorrückgewinnung aus phosphathaltigen Rohstoffen, wie bspw. Aschen aus der Mono- oder Mitverbrennung von Klärschlamm, Tierausscheidungen, Tiermehl, Tierresten und Tierkörpern, Aschen aus der Verbrennung von Gülle und Gärresten als Einzelstoff bzw. Gemische daraus, immer wichtiger für die Industrie.

In der Offenlegungsschrift DE 10 2009 020 745 A1 ist ein Verfahren zur Gewinnung von Wertstoffen aus Klärschlammprodukten durch Extraktion offenbart, wobei eine Suspension des Klärschlammproduktes in Wasser, Alkohol, einem Wasser/AlkoholGemisch oder einer wässrigen Lösung hergestellt und gasförmiges oderüberkritisches Kohlendioxid als Extraktionsmittel in diese Suspension des Klärschlammproduktes eingeleitet wird, ungelöste Feststoffe von dem flüssigen Suspendiermittel abgetrennt, Kohlendioxid aus dem Suspendiermittel entfernt und in dem Suspendiermittel gelöste Wertstoffe ausgefällt und von dem Suspendiermittel abgetrennt werden. Nachteilig an diesem Verfahren ist der sehr hohe Aufwand zu dessen Durchführung, wodurch das Verfahren sehr kostenintensiv ist.

Die DE 10 2016 116 633 A1 offenbart ein Verfahren zur Herstellung von Düngemittelgranulaten, wobei der phosphathaltige Sekundärrohstoff mit einer Mineralsäure zu einer Suspension versetzt wird und die Suspension anschließend einer Granulation zugeführt wird sowie die mit dem Verfahren hergestellten Düngemittelgranulate. Nachteilig hieran ist, dass die zu Düngemittelgranulaten verarbeitete Suspension Rohstoffpartikel aufweist, die reaktionsträge sind und an Engstellen in einer Vorrichtung wie Düsen zur Verstopfung dieser neigen.

In der EP 0 787 682 werden Mehrstoffdüsen zur Herstellung von Natriumpercarbonat in Granulatform im Sprühstrahl einer Wirbelschicht verwendet.

Die US 5 211 735 A offenbart ein Verfahren zur Düngemittelherstellung in einem Rohrreaktor, wobei phosphathaltiges Material mit einer Mineralsäure in dem Reaktor vermischt wird und die Reaktion unter definierten Temperaturen von 70 °C bis 150 °C und Drücken von ca. 2 bar bis 5 bar abläuft. Im Anschluss erfolgt eine Granulation der hergestellten Suspension.

Auch die US 3 419 378 A offenbart ein Verfahren zur Herstellung von Monoammoniumphosphat (MAP) als Reaktion von Phosphorsäure und Ammoniak bei etwa 3 bar.

In der DE 43 29 205 A1 wird ein Verfahren zur Herstellung von granulatförmigen Natriumpercarbonat durch Wirbelschicht-Sprühgranulation gezeigt.

Aufgabe der Erfindung ist es daher die aus dem Stand der Technik bekannten Nachteile zu überwinden und ein Verfahren bereitzustellen, mit dem Düngemittelgranulate herstellt werden können, wobei die Düngemittelgranulate bei Erzielung einer hohen Produktqualität der Düngemittelgranulate zu ihrer Herstellung keine großen Anlagenvolumina benötigen.

Die Aufgabe wird durch ein Verfahren eingangs genannter Art dadurch gelöst, dass vor dem Verdüsen als Sprühstrahl in der bewegten Partikelvorlage ein Mahlvorgang der Suspension stattfindet. Die im Fluidisierungsapparat erzeugten und/oder befindlichen Partikel werden im Sprühstrahl durch die verdüsten Ausgangsstoffe benetzt bzw. befeuchtet. Die Düngemittelgranulate bilden sich und werden in der Wirbelschicht weiter konditioniert. Zur Verdüsung können bspw. eine, zwei, drei, vier, fünf, sechs, usw. Mehrstoffdüsen eingesetzt werden. Die bewegte Partikelvorlage ist vorzugsweise eine Wirbel- oder eine Strahlschicht. Auch die in einem Granulator (z. B. Granulierteller, High-shear-Mischer, Nassmischer, oder dergleichen) erzeugten Granulate sind bewegte Partikelvorlagen in diesem Sinne. Die Reaktion der Ausgangsstoffe findet somit direkt im Sprühstrahl in der bewegten Partikelvorlage, bspw. einer Wirbelschicht, statt, sodass eine vorgeschaltete externe Reaktion in einem Reaktor nicht erforderlich ist, wodurch eine geringere Anzahl von Anlagenkomponenten sowie daraus folgend ein geringeres Anlagenvolumen, bspw. in Form von Reaktoren, notwendig ist. Auch die Investitionskosten werden dadurch entsprechend gesenkt. Zudem erfolgt eine energetische Prozessoptimierung, da die Reaktionswärme direkt in den Prozess eingeht. Die Konditionierung der einzelnen Zuläufe bzw. Zuleitungen, insbesondere des Suspensionszulaufs, ist nunmehr sehr einfach möglich. Hier kann nun bspw. eine Fällung und Abscheidung von toxischen Stoffen, wie Schwermetallen, oder eine Durchmischung und/oder Mahlung der phosphathaltigen Rohstoffe erfolgen.

Vor dem Verdüsen als Sprühstrahl in der bewegten Partikelvorlage, bspw. einer Strahl- oder Wirbelschicht, findet ein Mahlvorgang der Suspension statt. Durch den vor der Granulation erfolgenden Mahlvorgang wird die Prozessstabilität gesteigert, indem durch den Mahlvorgang die große Rohstoffpartikel aufweisenden phosphathaltigen Rohstoffe zerkleinert werden. Hierdurch wird die Reaktionsteilnahme der Rohstoffpartikel auch durch die Vergrößerung der Oberfläche der Rohstoffpartikel erhöht, d. h. die Kinetik der Reaktion wird beschleunigt, was wiederum zu einer gleichmäßigeren Umsetzung des phosphathaltigen Rohstoffs und zu Zeitersparnis führt. Gleichzeitig wird zudem die Verstopfungsgefahr an Engstellen in der Vorrichtung, insbesondere in Düsen, an Klappen und Schiebern oder dergleichen, reduziert. Zudem werden die Sedimentation und der Grobkornanteil an Sand der Rohstoffpartikel durch den Mahlvorgang minimiert.

Düngemittel sind Stoffe und Stoffgemische, welche in der Land- und Forstwirtschaft sowie im Gartenbau zur Ergänzung des Nährstoffangebots für die angebauten Pflanzen, insbesondere Kulturpflanzen, mit diversen Eigenschaften, gegebenenfalls kombiniert und/oder funktionalisiert mit weiteren Materialien, benutzt werden.

Düngemittelgranulate sind Düngemittel in Granulatform, insbesondere mit einer annähernd sphärischen Form, einer vorzugsweiseausreichenden Eigenfestigkeit und vornehmlich einer mittleren Granulatgröße von 100 *µ*m bis 25 mm, bevorzugt von 100 *µ*m bis 10 mm, besonders bevorzugt von 250 *µ*m bis 5 mm, ganz besonders bevorzugt von 500 *µ*m bis 3 mm.

Nach einer vorteilhaften Ausgestaltung des Verfahrens erfolgt die Verdüsung der Ausgangsstoffe unter Einwirkung eines Zerstäubergases. Neben der Zuführung eines Zerstäubergases zur Verdüsung ist auch die Zerstäubung mittels Druckdüse möglich.

Bevorzugt ist die Mehrstoffdüse als Dreistoffdüse ausgebildet, bei der um ein mittig angeordnetes Zentralrohr zwei koaxial angeordnete Hüllrohre angeordnet sind, wobei dem Zentralrohr die Säure, einem zwischen dem Zentralrohr und dem ersten Hüllrohr entstehenden ersten Ringspalt die Suspension und einem zwischen dem ersten Hüllrohr und dem zweiten Hüllrohr entstehenden zweiten Ringspalt das Zerstäubergas zugeführt wird. Durch die vorgenannte Anordnung der Ausgangsstoffe für den Verdüsungsvorgang werden die Ausgangsstoffe im Sprühstrahl ideal dispergiert, die reaktiven Oberflächen maximiert sowie miteinander vermischt und können daher sehr gut und schnell miteinander reagieren.

Entsprechend einer zusätzlichen vorteilhaften Fortbildung des Verfahrens wird der Mehrstoffdüse ein Zusatzstoff über einen Zusatzstoffzulauf zugeführt. Bevorzugt ist daher die Mehrstoffdüse ausgebildet, um neben den Ausgangsstoffen mindestens einen Zusatzstoff zu verdüsen. Der Zusatzstoff der Mehrstoffdüse wird bevorzugt in einem sich durch Anordnung eines weiteren koaxialen Hüllrohrs um das Zentralrohr bildenden weiteren entstehenden Ringspalt zugeführt.

Gemäß einer weiteren vorteilhaften Ausgestaltung des Verfahrens wird die Suspension aus phosphathaltigem Rohstoff und einer wässrigen Lösung, Wasser und/oder einer Säure gebildet. Bei einer Bildung der Suspension aus phosphathaltigem Rohstoff und Säure findet bereits während der Zuführung der Suspension in einem Suspensionszulauf zur Mehrstoffdüse ein Aufschluss der Phosphate durch die Säure statt, sodass die Reaktion im Sprühstrahl verbessert weitere Phosphate lösen kann.

Nach einer vorteilhaften Weiterbildung des Verfahrens ist die Säure eine Mineralsäure, bevorzugt Salzsäure, Schwefelsäure, Salpetersäure oder Phosphorsäure, oder ein beliebiges Gemisch aus den Mineralsäuren.

Besonders bevorzugt wird der Mahlvorgang als Trockenmahlung und/oder Nassmahlung durchgeführt. Die Trockenmahlung weist als Vorteil eine hohe Mahleffektivität bei geringem Platzbedarf und geringem spezifischen Energieverbrauch auf. Bei der Trockenmahlung ist die gewünschte Endfeinheit der Rohstoffpartikel des phosphathaltigen Rohstoffs frei und exakt einstellbar. Bei der Nassmahlung sind bei einem geringen spezifischen Energieverbrauch auch grobe phosphathaltige Rohstoffe verarbeitbar. Zudem weist die Rührwerkslagerung keine Produktberührung auf. Eine Kombination von Trocken- und Nassmahlung ermöglicht eine Nachmahlung von Suspensionen und trockenen Rohstoffen. Vorteilhaft ist hierbei ein deutlich reduzierter Gesamtenergieverbrauch, eine Durchsatzerhöhung bei gleichbleibender Produktfeinheit oder alternativ eine Steigerung der Produktfeinheit bei gleichbleibendem Durchsatz. Ferner macht die Kombination mit von Trocken- und Nassmahlung den Einsatz von kontinuierlich und diskontinuierlich arbeitenden Mühlen möglich.

Ganz besonders bevorzugt erfolgt der Mahlvorgang vor, während und/oder nach der Erzeugung der Suspension. Wird der Mahlvorgang vor der Erzeugung der Suspension durchgeführt, erfolgt dieser als Trockenmahlung der phosphathaltigen Rohstoffe. Im Gegensatz hierzu wird eine Nassmahlung der phosphathaltigen Rohstoffe während und/oder nach der Erzeugung der Suspension in der Suspensionszuführung, bevorzugt als Reaktoreinheit ausgebildet, bspw. ein Rohrreaktor, eingesetzt. Bei einer Kombination von Trocken- und Nassmahlung im Verfahren findet der Mahlvorgang sowohl vor als auch während und/oder nach der Erzeugung der Suspension in der Suspensionszuführung statt. Durch den Einsatz der unterschiedlichen Mahlverfahren wird für den Anlagenbauer bei der Ausgestaltung des Verfahrens die Möglichkeit geschaffen auf die unterschiedlichen phosphathaltigen Rohstoffe einzugehen und das Verfahren stets optimal an die phosphathaltigen Rohstoffe anzupassen.

Nach einer zusätzlichen vorteilhaften Ausgestaltung des Verfahrens wird die Suspension vor dem Verdüsen als Sprühstrahl in der bewegten Partikelvorlage mittels einer Mischeinheit durchmischt. Insbesondere bei Reaktionen, wie zum Beispiel dem Aufschluss von Phosphaten der phosphathaltigen Rohstoffe durch Säure, ist es von höchster Wichtigkeit, den Kontakt zwischen den Reaktionspartnern sicherzustellen. Bevorzugt umfasst die Mischeinheit daher ein Mischelement, das besonders bevorzugt als statischer Mischer ausgebildet ist. Statische Mischer sind Apparate mit feststehenden Einbauten, die unter Nutzung der Strömungsenergie die Mischung fluider Produktströme, wie hier der Suspension, bewirken.

Vorteilhafterweise wird die Suspension unter Wärmezufuhr oder Wärmeabfuhr erzeugt. Mittels Wärmezufuhr oder Wärmeabfuhr lassen sich beispielsweise durch exotherme oder endotherme Reaktionen auftretende Temperaturänderungen besonders gut abfangen, sodass die gewünschten Reaktionsbedingungen stets erreicht werden und ermöglichen somit die optimale Kontrolle über das ablaufende Verfahren.

Entsprechend einer weiteren vorteilhaften Ausgestaltung des Verfahrens werden die im Sprühstrahl die schwerlöslichen Phosphate des phosphathaltigen Rohstoffs zumindest teilweise gelöst und in eine neutral-ammoniumcitratlösliche Phosphatphase umgewandelt, sodass sich ein Düngemittelgranulat bildet dessen P₂O₅-Gehalt größer 75 % neutralammoniumcitratlöslich ist. Die Löslichkeiten liefern Anhaltspunkte für die Wirkungsdynamik des jeweiligen Düngemittels geben. Der säurelösliche P-Anteil von Düngemitteln wird als langfristig nutzbar angesehen. Langfristig bedeutet hierbei über mehrere Fruchtfolgen hinweg. Dieser in "Königswasser" lösliche P-Anteil wird als Gesamtgehalt bezeichnet. Der neutral-ammoniumcitratlösliche P-Anteil kann als Anhaltspunkt für die mittelfristige Verfügbarkeit des Phosphats herangezogen werden, d. h. über den Zeitraum von etwa einer Fruchtfolge und der unmittelbar verfügbare P-Anteil eines Düngemittels wird durch seine Löslichkeit in Wasser beschrieben. Je höher der wasserlösliche Anteil, desto schneller bzw. leichter die Verfügbarkeit des Dünge-P für die Pflanze. Die Löslichkeiten haben in erster Linie den Zweck, jeweils ganz bestimmte Phosphatdüngemittel zu charakterisieren, d. h. sie in ihren typbestimmenden Bestandteilen zu beschreiben.

Gemäß einem bevorzugten Verfahren wird der phosphathaltige Rohstoff vor einer Erzeugung der Suspension klassiert. Bevorzugt erfolgt das Klassieren mittels Sieben oder Sichten. Hierdurch wird neben dem Herausfiltern von groben Abfällen eine Vorauswahl der weiterzuverarbeitenden phosphathaltigen Rohstoffpartikel erreicht, sodass das herzustellende Düngemittelgranulat eine besonders hohe Qualität aufweist, da ausschließlich Rohstoffpartikel mit einem bestimmten maximalen Durchmesser verarbeitet werden. Die Trennung des phosphathaltigen Rohstoffs erfolgt in Fraktionen, vorzugsweise nach den Kriterien Partikelgröße oder Partikeldichte, mit dem Ziel die Herstellung von mindestens zwei Teilmengen des ursprünglichen phosphathaltigen Rohstoffs zu erreichen, wobei jede Teilmenge möglichst vollständig den vorgegebenen Partikelgrößenkriterien für die Weiterverarbeitung entspricht.

Bevorzugt wird ein pH-Wert der Suspension vor oder während dem Verdüsen als Sprühstrahl in der bewegten Partikelvorlage eingestellt, um eine Klebrigkeit der Suspension bzw. der entstehenden Düngemittelgranulate einzustellen. Hierzu wird vorzugsweise in der Reaktoreinheit nach dem Mahlvorgang eine Messung des pH-Istwerts der Suspension durchgeführt. Dieser wird anschließend in einer pH-Wert-Regeleinrichtung mit einem für das Verfahren, insbesondere die Sprühgranulation, vorgegebenen pH-Sollwert abgeglichen und entsprechend eingeregelt. Dies wird erreicht, indem der Suspension zur Einstellung des pH-Werts im Sprühstrahl eine Säure oder eine Lauge zugeführt wird. Durch die pH-Wert Regelung bspw. mittels pH-Wert-Regeleinrichtung besteht somit die Möglichkeit den pH-Wert im Sprühstrahl der bewegten Partikelvorlage, insbesondere einer Wirbelschicht, einzustellen. Die Einstellung des pH-Werts im Sprühstrahl der bewegten Partikelvorlage wirkt sich entsprechend auf die Klebrigkeit der miteinander reagierenden Ausgangsstoffe aus und ist für das Verdüsen von sehr großer Bedeutung. Die pH-Wert Regelung kann auch als zusätzlicher externer Regelkreis ausgebildet sein. Je saurer der pH-Wert desto klebriger die miteinander reagierenden Ausgangsstoffe.

Entsprechend einer weiteren vorteilhaften Fortbildung des Verfahrens wird das Verfahren in einer Wirbel- oder Strahlschicht durchgeführt.

Nach einer zusätzlichen vorteilhaften Ausbildung des Verfahrens wird das Verfahren in einem Mischer oder einem mechanischen Granulator durchgeführt. Insbesondere erfolgt die Durchführung des Verfahrens z.B. in einem Granulierteller, einem High-shear-Mischer oder einem Nassmischer, oder dergleichen.

Weitere Vorteile und vorteilhafte Ausgestaltungen der Erfindung sind der nachfolgenden Beschreibung und den Ansprüchen und entnehmbar.

Nachfolgend wird die Erfindung anhand der beiliegenden Zeichnung näher erläutert dieser zeigen
- Figur 1: ein Grundfließbild eines ersten Ausführungsbeispiels des bevorzugten Verfahrens,
- Figur 2: eine schematische Untersicht einer als Dreistoffdüse ausgebildeten Mehrstoffdüse,
- Figur 3: ein Grundfließbild eines zweiten Ausführungsbeispiels des bevorzugten Verfahrens und
- Figur 4: ein Grundfließbild eines dritten Ausführungsbeispiels des bevorzugten Verfahrens.

In den nachfolgend aufgeführten Ausführungsbeispielen wird das Verfahren anhand einer als Wirbelschicht ausgebildeten bewegeten Partikelvorlage dargestellt. Andere nicht illustrierte Ausführungsbeispiele weisen als bewegte Partikelvorlagen, wie vorab beschrieben, Strahlschichten oder bewegte Granulate in Granulatoren auf.

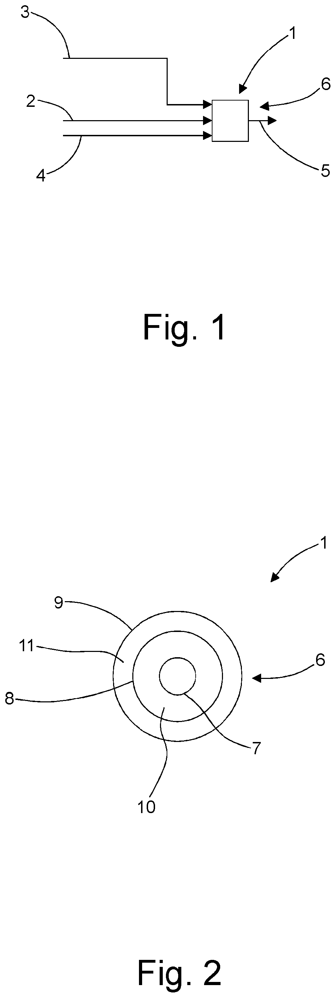

Dies vorweg, zeigt Fig. 1 ein Grundfließbild eines ersten Ausführungsbeispiels des bevorzugten Verfahrens zur Herstellung von Düngemittelgranulat.

Zur Herstellung von Düngemittelgranulat werden einer Mehrstoffdüse 1 Ausgangsstoffe zur Verdüsung in eine in einer Wirbelkammer eines Fluidisierungsapparates ausgebildete Wirbelschicht zugeführt. Der Fluidisierungsapparat ist bevorzugt als Wirbel- oder Strahlschichtapparat ausgebildet.

Als Ausgangsstoffe werden der Mehrstoffdüse 1 eine über einen Säurezulauf 2 zugeführte Säure und eine über einen Suspensionszulauf 3 zugeführte, einen phosphathaltigen Rohstoff aufweisende Suspension verwendet.

Die als Ausgangsstoff verwendete Säure ist bevorzugt eine Mineralsäure, nämlich Salz-, Schwefel-, Salpeter- oder Phosphorsäure, oder ein beliebiges Gemisch aus den Mineralsäuren. Mineralsäuren können mit den im phosphathaltigen Rohstoff enthaltenen Phosphate im Sprühstrahl der Wirbelschicht sehr gut reagieren und diese umwandeln.

Die phosphathaltigen Rohstoffe, sind bspw. Aschen aus der Mono- oder Mitverbrennung von Klärschlamm, Tierausscheidungen, Tiermehl, Tierresten und Tierkörpern, Aschen aus der Verbrennung von Gülle und Gärresten als Einzelstoff bzw. Gemische daraus, immer wichtiger für die Industrie oder beliebige Gemische hieraus. Die Suspension wird im ersten Ausführungsbeispiel aus phosphathaltigem Rohstoff und Wasser als Aufschlämmung gebildet.

Zusätzlich wird der Mehrstoffdüse 1 ein Zerstäubergas über eine Zerstäubergaszuleitung 4 zugeführt.

Die Mehrstoffdüse 1 verdüst die Ausgangsstoffe unter Einwirkung des Zerstäubergases als Sprühstrahl 5 in der Wirbelschicht, sodass die der als Dreistoffdüse 6 ausgebildeten Mehrstoffdüse 1 zugeführten Ausgangsstoffe im Sprühstrahl 5 miteinander reagieren und sich das Düngemittelgranulat im Sprühstrahl 5 der Wirbelschicht ausbildet.

Das gebildete Düngemittelgranulat wird anschließend aus dem Fluidisierungsapparat ausgetragen. Insbesondere erfolgt der Austrag über eine einen klassierenden Fertiggutabzug, sodass nur Düngemittelgranulate ausgetragen werden, die eine gewünschte Mindestgranulatgröße aufweisen.

Eine schematische Untersicht der im ersten Ausführungsbeispiel verwendeten Mehrstoffdüse 1 ist in Fig. 2 dargestellt.

Im ersten Ausführungsbeispiel ist die Mehrstoffdüse 1 als Dreistoffdüse 6 ausgebildet, bei der um ein mittig angeordnetes Zentralrohr 7 zwei koaxial angeordnete Hüllrohre 8, 9 angeordnet sind. Dem Zentralrohr 7 wird die Säure, einem zwischen dem Zentralrohr 7 und dem ersten Hüllrohr 8 entstehenden ersten Ringspalt 10 wird die Suspension und einem zwischen dem ersten Hüllrohr 8 und dem zweiten Hüllrohr 9 entstehenden zweiten Ringspalt 11 wird das Zerstäubergas zugeführt. Durch diese Anordnung der Zuläufe bzw. Zuleitungen in der Mehrstoffdüse 1 wird eine optimale Reaktion der Ausgangsstoffe im Sprühstrahl der Wirbelschicht sichergestellt. Die Zerstäuberluft zerstäubt die Ausgangsstoffe und bringt diese gleichzeitig so in Kontakt, dass eine Reaktion zwischen diesen stattfinden kann.

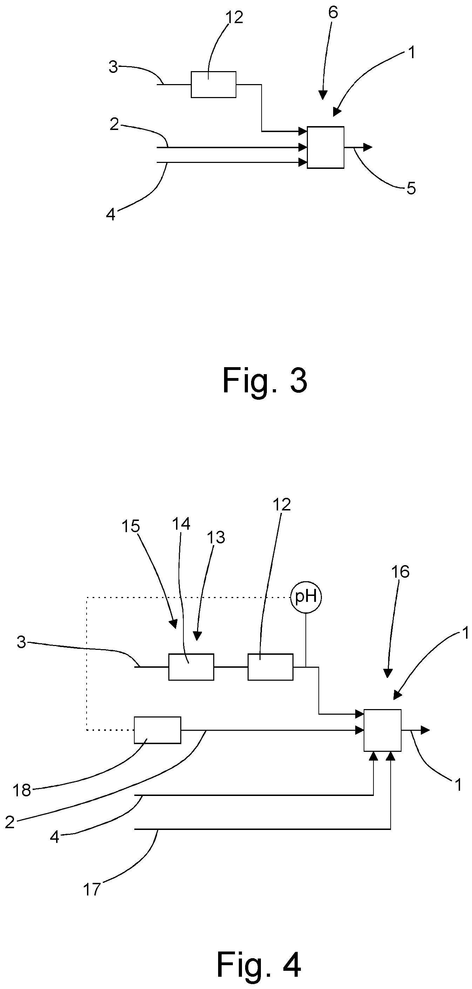

Fig. 3 zeigt ein Grundfließbild eines zweiten Ausführungsbeispiels des bevorzugten Verfahrens zur Herstellung von Düngemittelgranulat mit einer ebenfalls als Dreistoffdüse 6 ausgebildeten Mehrstoffdüse 1.

Im Unterschied zum im ersten Ausführungsbeispiel dargestellten Verfahren verfügt der Suspensionszulauf 3 über eine Mahleinheit 12. Durch den Mahlvorgang in der Mahleinheit 12 werden die phosphathaltigen Rohstoffe in der Suspension im Suspensionszulauf 3 zerkleinert bzw. gemahlen. Hierdurch wird eine homogenere Feststoffpartikelgröße der phosphathaltigen Rohstoffe in der Suspension erreicht.

In der Fig. 4 wird ein Grundfließbild eines dritten Ausführungsbeispiels des bevorzugten Verfahrens zur Herstellung von Düngemittelgranulat dargestellt.

Im Unterschied zum in Fig. 3 gezeigten und beschriebenen zweiten Ausführungsbeispiel des bevorzugten Verfahrens weist der Suspensionszulauf 3 neben der Mahleinheit 12 zusätzlich eine Mischeinheit 13 auf. Diese ist stromauf der Mahleinheit 12 im Suspensionszulauf 3 angeordnet. Um eine gute Durchmischung der Suspension im Suspensionszulauf 3 sicherzustellen umfasst die Mischeinheit 13 ein als statischen Mischer 14 ausgebildetes Mischelement 15. Der statische Mischer 14 nutzt feststehende Einbauten, um durch die Strömungsenergie die Mischung der Suspension zu bewirken.

Die Suspension wird im dritten Ausführungsbeispiel aus dem phosphathaltigen Rohstoff und einer Säure, insbesondere einer Mineralsäure, hergestellt.

Neben der Durchmischung und Mahlung der phosphathaltigen Rohstoffe enthaltenden Suspension besteht die Möglichkeit weitere Konditionierungen durchzuführen, bspw. eine Fällung und/oder Abscheidung der Schwermetalle aus der Suspension.

Zudem ist die Mehrstoffdüse 1 im dritten Ausführungsbeispiel als Vierstoffdüse 16 ausgebildet. Hierbei wird der Mehrstoffdüse 1 ein oder mehrere Zusatzstoffe über einen Zusatzstoffzulauf 17 zugeführt. Der Zusatzstoff wird der als Vierstoffdüse 16 ausgebildeten Mehrstoffdüse 1 einem sich durch Anordnung eines weiteren koaxialen Hüllrohrs um das Zentralrohr 7 entstehenden weiteren Ringspalt zugeführt. Auch mehrere Zusatzstoffzuläufe sind entsprechend denkbar.

Als Zusatzstoffe werden bspw. Bindemittel zur Härteeinstellung der Düngemittelgranulate oder Düngemittelzusatzstoffe, wie Harnstoff, Ammonium-Sulfat-Salze oder Nährstoffkomponenten bezeichnet. Als Nährstoffkomponenten sind alle Stoffe zu verstehen, die das Nährstoffangebot für die angebauten Pflanzen liefert oder ergänzt, um das Wachstum und die Entwicklung der Pflanzen zu steuern und/oder zu unterstützen, so beispielsweise Komponenten die Stickstoff (N) und/oder Phosphor (P) und/oder Kalium (K) und/oder Magnesium (Mg) und/oder Schwefel (S) und/oder lebensnotwendige Spurenelemente enthalten.

Über den Säurezulauf 2 wird der Mehrstoffdüse 1 zur Einstellung des pH-Werts im Sprühstrahl eine Säure oder eine Lauge zugeführt. Hierzu wird vorzugsweise der Ist-pH-Wert nach dem Mahlvorgang in der im Suspensionszulauf 2 strömenden Suspension gemessen und anschließend in einer pH-Wert-Regeleinrichtung 18 mit einem für das Verfahren, insbesondere die Sprühgranulation, vorgegebenen pH-Sollwert abgeglichen und entsprechend eingeregelt. Je saurer der pH-Wert desto klebriger sind die miteinander reagierenden Ausgangsstoffe. Durch die pH-Wert Regelung bspw. mittels pH-Wert-Regeleinrichtung 18 besteht somit die Möglichkeit den pH-Wert im Sprühstrahl der Wirbelschicht einzustellen. Diese Einstellung des pH-Werts im Sprühstrahl der Wirbelschicht wirkt sich entsprechend auf die Klebrigkeit der miteinander reagierenden Ausgangsstoffe aus und ist für das Verdüsen von sehr großer Bedeutung.

## Patentansprüche

1. Verfahren zur Herstellung von Düngemittelgranulat durch Eindüsung von Ausgangsstoffen mittels mindestens einer Mehrstoffdüse (1) in eine bewegte Partikelvorlage, wobei als Ausgangsstoff eine Säure und eine einen phosphathaltigen Rohstoff aufweisende Suspension verwendet wird, die durch die Mehrstoffdüse (1) als Sprühstrahl (5) in der bewegten Partikelvorlage verdüst werden, **dadurch gekennzeichnet, dass** die Ausgangsstoffe im Sprühstrahl (5) miteinander reagieren und sich das Düngemittelgranulat im Sprühstrahl (5) bildet, wobei vor dem Verdüsen als Sprühstrahl (5) in der bewegten Partikelvorlage ein Mahlvorgang der Suspension stattfindet.

2. Verfahren nach Anspruch 1, **dadurch gekennzeichnet, dass** die Verdüsung der Ausgangsstoffe unter Einwirkung eines Zerstäubergases erfolgt, wobei zweckmäßigerweise die Mehrstoffdüse (1) als Dreistoffdüse (6) ausgebildet ist, bei der um ein mittig angeordnetes Zentralrohr (7) zwei koaxial angeordnete Hüllrohre (8, 9) angeordnet sind, wobei dem Zentralrohr (7) die Säure, einem zwischen dem Zentralrohr (7) und dem ersten Hüllrohr (8) entstehenden ersten Ringspalt (10) die Suspension und einem zwischen dem ersten Hüllrohr (8) und dem zweiten Hüllrohr (9) entstehenden zweiten Ringspalt (11) das Zerstäubergas zugeführt wird.

3. Verfahren nach einem der Ansprüche 1 oder 2, **dadurch gekennzeichnet, dass** der Mehrstoffdüse (1) mindestens ein Zusatzstoff über einen Zusatzstoffzulauf (17) zugeführt wird, wobei zweckmäßigerweise die Mehrstoffdüse (1) ausgebildet ist, um neben den Ausgangsstoffen mindestens einen Zusatzstoff zu verdüsen.

4. Verfahren nach Anspruch 3, **dadurch gekennzeichnet, dass** der Zusatzstoff der Mehrstoffdüse (1) einem sich durch Anordnung eines weiteren koaxialen Hüllrohrs um das Zentralrohr (7) entstehenden weiteren Ringspalt zugeführt wird.

5. Verfahren nach einem der vorhergehenden Ansprüche, **dadurch gekennzeichnet, dass** die Suspension aus phosphathaltigem Rohstoff und einer wässrigen Lösung, Wasser und/oder einer Säure gebildet wird.

6. Verfahren nach einem der vorhergehenden Ansprüche, **dadurch gekennzeichnet, dass** die Säure eine Mineralsäure, bevorzugt Salzsäure, Schwefelsäure, Salpetersäure oder Phosphorsäure, oder ein beliebiges Gemisch aus den Mineralsäuren ist.

7. Verfahren nach einem der vorhergehenden Ansprüche, **dadurch gekennzeichnet, dass** der Mahlvorgang als Trockenmahlung und/oder Nassmahlung durchgeführt wird.

8. Verfahren nach einem der vorhergehenden Ansprüche, **dadurch gekennzeichnet, dass** der Mahlvorgang vor, während und/oder nach der Erzeugung der Suspension erfolgt.

9. Verfahren nach einem der vorhergehenden Ansprüche, **dadurch gekennzeichnet, dass** die Suspension vor dem Verdüsen als Sprühstrahl (5) in der bewegten Partikelvorlage mittels einer Mischeinheit (13) durchmischt wird.

10. Verfahren nach einem der vorhergehenden Ansprüche, **dadurch gekennzeichnet, dass** die Suspension unter Wärmezufuhr oder Wärmeabfuhr erzeugt wird.

11. Verfahren nach einem der vorhergehenden Ansprüche, **dadurch gekennzeichnet, dass** im Sprühstrahl (5) die schwerlöslichen Phosphate des phosphathaltigen Rohstoffs zumindest teilweise gelöst und in eine neutral-ammoniumcitratlösliche Phosphatphase umgewandelt werden, sodass sich ein Düngemittelgranulat bildet dessen P₂O₅-Gehalt größer 75 % neutralammoniumcitratlöslich ist.

12. Verfahren nach einem der vorhergehenden Ansprüche, **dadurch gekennzeichnet, dass** der phosphathaltige Rohstoff vor einer Erzeugung der Suspension klassiert wird, wobei zweckmäßigerweise das Klassieren mittels Sieben oder Sichten erfolgt.

13. Verfahren nach einem der vorhergehenden Ansprüche, **dadurch gekennzeichnet, dass** ein pH-Wert der Suspension vor oder während dem Verdüsen als Sprühstrahl (5) in der bewegten Partikelvorlage eingestellt wird, um eine Klebrigkeit der Suspension einzustellen, wobei zweckmäßigerweise der Suspension zur Einstellung des pH-Werts im Sprühstrahl (5) eine Säure oder eine Lauge zugeführt wird.

14. Verfahren nach einem der vorhergehenden Ansprüche, **dadurch gekennzeichnet, dass** das Verfahren in einer Wirbel- oder Strahlschicht durchgeführt wird.

15. Verfahren nach einem der vorhergehenden Ansprüche, **dadurch gekennzeichnet, dass** das Verfahren in einem Mischer oder einem mechanischen Granulator durchgeführt wird.

## Claims

1. Method for the production of fertilizer granules by injecting raw materials by means of at least one multi-substance nozzle (1) into a moving particle bed, wherein an acid and a suspension comprising a phosphate-containing raw material are used as raw materials, which are atomized by the multi-substance nozzle (1) as a spray (5) in the moving particle bed, **characterized in that** the raw materials react with one another in the spray (5) and the fertilizer granules are formed in the spray (5), with a grinding process of the suspension taking place before the atomization as a spray (5) in the moving particle bed.

2. Method according to claim 1, **characterized in that** the raw materials are atomized in presence of an atomizing gas, the multi-substance nozzle (1) being expediently designed as a tri-substance nozzle (6) in which two coaxially arranged cladding tubes (8, 9) are arranged around a centrally arranged central tube (7), wherein the acid is fed to the central tube (7), the suspension is fed to a first annular gap (10) that is formed between the central tube (7) and the first cladding tube (8), and the atomizing gas is fed to a second annular gap (11) that is formed between the first cladding tube (8) and the second cladding tube (9).

3. Method according to one of claims 1 or 2, **characterized in that** at least one additive is fed to the multi-substance nozzle (1) via an additive feed (17), the multi-substance nozzle (1) being expediently designed to atomize at least one additive in addition to the raw materials.

4. Method according to claim 3, **characterized in that** the additive is fed to a further annular gap of the multi-substance nozzle (1), which annular gap is formed by arranging a further coaxial cladding tube around the central tube (7).

5. Method according to one of the preceding claims, **characterized in that** the suspension is formed from phosphate-containing raw material and an aqueous solution, water and/or an acid.

6. Method according to one of the preceding claims, **characterized in that** the acid is a mineral acid, preferably hydrochloric acid, sulfuric acid, nitric acid or phosphoric acid, or any mixture of the mineral acids.

7. Method according to one of the preceding claims, **characterized in that** the grinding process is conducted as dry grinding and/or wet grinding.

8. Method according to one of the preceding claims, **characterized in that** the grinding process takes place before, during and/or after the production of the suspension.

9. Method according to one of the preceding claims, **characterized in that** the suspension, prior to atomization as a spray (5), is thoroughly mixed in the moving particle bed by means of a mixing unit (13).

10. Method according to one of the preceding claims, **characterized in that** the suspension is produced with heat being added or removed.

11. Method according to one of the preceding claims, **characterized in that** the poorly soluble phosphates of the phosphate-containing raw material are at least partially dissolved in the spray (5) and converted into a phosphate phase soluble in neutral ammonium citrate, so that fertilizer granules are formed whose P₂O₅ content is greater than 75% soluble in neutral ammonium citrate.

12. Method according to one of the preceding claims, **characterized in that** the phosphate-containing raw material is classified before the suspension is produced, the classification being expediently carried out by means of screens or sifting.

13. Method according to one of the preceding claims, **characterized in that** a pH-value of the suspension is adjusted before or during the atomization as a spray (5) in the moving particle bed in order to adjust a stickiness of the suspension, wherein an acid or a base is expediently fed to the suspension for adjusting the pH-value in the spray (5).

14. Method according to one of the preceding claims, **characterized in that** the method is conducted in a fluidized bed or spouted bed.

15. Method according to one of the preceding claims, **characterized in that** the method is conducted in a mixer or a mechanical granulator.

## Revendications

1. Procédé de fabrication de granulés d'engrais par injection de matières premières au moyen d'au moins une buse multicomposant (1) dans un gabarit de particules en mouvement, dans lequel sont utilisés en tant que matière première un acide et une suspension présentant une matière première contenant du phosphate, qui sont atomisés par la buse multicomposant (1) sous forme de jet de pulvérisation (5) dans le gabarit de particules en mouvement, **caractérisé en ce que** les matières premières dans le
le jet de pulvérisation (5) réagissent entre elles et les granulés d'engrais se forment dans le jet de pulvérisation (5), dans lequel une opération de broyage de la suspension a lieu avant l'atomisation sous forme de jet de pulvérisation (5) dans le gabarit de particules en mouvement.

2. Procédé selon la revendication 1, **caractérisé en ce que** l'atomisation des matières premières est effectuée sous l'effet d'un gaz d'atomisation, dans lequel la buse multicomposant (1) est réalisée de manière opportune en tant que buse à trois composants (6), dans laquelle deux tubes d'enveloppe (8, 9) disposés de manière coaxiale sont disposés autour d'un tube central (7) disposé au milieu, dans lequel l'acide est amené au tube central (7), la suspension est amenée à une première fente annulaire (10) formée entre le tube central (7) et le premier tube d'enveloppe (8) et le gaz de pulvérisation est amené à une deuxième fente annulaire (11) formée entre le premier tube d'enveloppe (8) et le deuxième tube d'enveloppe (9).

3. Procédé selon l'une quelconque des revendications 1 ou 2, **caractérisé en ce qu'**au moins un additif est amené à la buse multicomposant (1) par l'intermédiaire d'une arrivée d'additif (17), dans lequel la buse multicomposant (1) est réalisée de manière appropriée pour atomiser, en plus des matières premières, au moins un additif.

4. Procédé selon la revendication 3, **caractérisé en ce que** l'additif de la buse multicomposant (1) est amené à une fente annulaire supplémentaire résultant de l'agencement d'un autre tube d'enveloppe coaxial autour du tube central (7).

5. Procédé selon l'une quelconque des revendications précédentes, **caractérisé en ce que** la suspension est formée à partir d'une matière première contenant du phosphate et d'une solution aqueuse, d'eau et/ou d'un acide.

6. Procédé selon l'une quelconque des revendications précédentes, **caractérisé en ce que** l'acide est un acide minéral, de manière préférée de l'acide chlorhydrique, de l'acide sulfurique, de l'acide nitrique ou de l'acide phosphorique, ou un mélange quelconque des acides minéraux.

7. Procédé selon l'une quelconque des revendications précédentes, **caractérisé en ce que** l'opération de broyage est mise en œuvre sous forme de broyage à sec et/ou de broyage par voie humide.

8. Procédé selon l'une quelconque des revendications précédentes, **caractérisé en ce que** l'opération de broyage a lieu avant, pendant et/ou après la production de la suspension.

9. Procédé selon l'une quelconque des revendications précédentes, **caractérisé en ce que** la suspension est mélangée avant l'atomisation sous forme de jet de pulvérisation (5) dans le gabarit de particules en mouvement au moyen d'une unité de mélange (13).

10. Procédé selon l'une quelconque des revendications précédentes, **caractérisé en ce que** la suspension est produite sous apport ou évacuation de chaleur.

11. Procédé selon l'une quelconque des revendications précédentes, **caractérisé en ce que** les phosphates difficilement solubles de la matière première contenant du phosphate sont dissous au moins en partie dans le jet de pulvérisation (5) et sont transformés en une phase de phosphate soluble dans du citrate d'ammonium neutre, si bien que se forment des granulés d'engrais dont la teneur en P₂O₅ supérieure à 75 % est soluble dans du citrate d'ammonium neutre.

12. Procédé selon l'une quelconque des revendications précédentes, **caractérisé en ce que** la matière première contenant du phosphate est classée avant une production de la suspension, dans lequel le classement est effectué de manière appropriée par tamisage ou criblage.

13. Procédé selon l'une quelconque des revendications précédentes, **caractérisé en ce qu'**une valeur de **pH** de la suspension est réglée avant ou pendant l'atomisation sous forme de jet de pulvérisation (5) dans le gabarit de particules en mouvement pour régler un pouvoir collant de la suspension, dans lequel un acide ou une solution alcaline est amené ou amenée de manière appropriée à la suspension pour régler la valeur de **pH** dans le jet de pulvérisation (5).

14. Procédé selon l'une quelconque des revendications précédentes, **caractérisé en ce que** le procédé est mis en œuvre dans un lit fluidisé.

15. Procédé selon l'une quelconque des revendications précédentes, **caractérisé en ce que** le procédé est mis en œuvre dans un mélangeur ou un granulateur mécanique.
